# EUROPÄISCHE PATENTANMELDUNG

(11) **EP 2 221 901 A1**
(43) Veröffentlichungstag der Anmeldung: **25.08.2010**
(21) Anmeldenummer: 09012981.8
(22) Anmeldetag: 14.10.2009
(51) Int. Cl.: H01M 2/02, H01M 2/24, H01M 10/50

(54) **Galvanische Zelle mit Umhüllung II**

(30) Priorität: 21.01.2009 DE 102009005497
(71) Anmelder: Li-Tec Battery GmbH, 01917 Kamenz (DE)
(72) Erfinder: Hohenthanner, Claus-Rupert Dr., 63457 Hanau (DE)
(74) Vertreter: Schlotter, Alexander Carolus Paul

(57) **Zusammenfassung**

Eine erfindungsgemäße galvanische Zelle von insbesondere im Wesentlichen prismatischer Gestalt weist wenigstens einen ersten Elektrodenstapel auf. Ein erster Stromableiter ist mit einem ersten Elektrodenstapel verbunden. Weiter weist die galvanische Zelle eine Umhüllung auf, welche einen ersten Elektrodenstapel wenigstens teilweise umschließt. Dabei erstreckt sich ein erster Stromableiter teilweise aus der Umhüllung. Ferner weist die galvanische Zelle einen zweiten Elektrodenstapel und einen zweiten Stromableiter auf. Die Umhüllung hat wenigstens ein erstes Formteil und ein zweites Formteil. Eines der Formteile weist eine höhere Wärmeleitfähigkeit auf, als die übrigen Formteile. Die Formteile sind vorgesehen, wenigstens einen Elektrodenstapel wenigstens teilweise zu umschließen.

## Beschreibung

Die vorliegende Erfindung betrifft eine galvanische Zelle für eine Batterie. Die Erfindung wird im Zusammenhang mit Lithium-lonen-Batterien zur Versorgung von KFZ-Antrieben beschrieben. Es wird darauf hingewiesen, dass die Erfindung auch unabhängig von der Chemie, der Bauart der galvanischen Zelle oder unabhängig von der Art des versorgten Antriebs Verwendung finden kann.

Aus dem Stand der Technik sind Batterien mit mehreren galvanischen Zellen zur Versorgung von KFZ-Antrieben bekannt. Während des Betriebs einer derartigen Batterie treten in den galvanischen Zellen auch unumkehrbare chemische Reaktionen auf. Diese unumkehrbaren Reaktionen führen zu einer verringerten Ladekapazität der galvanischen Zellen.

Der Erfindung liegt die Aufgabe zugrunde, die Ladekapazität der galvanischen Zellen einer Batterie über eine höhere Zahl von Ladezyklen zu erhalten. Das wird erfindungsgemäß durch die Gegenstände der unabhängigen Ansprüche erreicht. Zu bevorzugende Weiterbildungen der Erfindung sind Gegenstand der Unteransprüche.

Eine erfindungsgemäße galvanische Zelle von insbesondere im Wesentlichen prismatischer Gestalt weist wenigstens einen ersten Elektrodenstapel auf. Ein erster Stromableiter ist mit einem ersten Elektrodenstapel verbunden. Weiter weist die galvanische Zelle eine Umhüllung auf, welche den ersten Elektrodenstapel wenigstens teilweise umschließt. Dabei erstreckt sich der erster Stromableiter teilweise aus der Umhüllung. Ferner weist die galvanische Zelle einen zweiten Elektrodenstapel und einen zweiten Stromableiter auf. Die Umhüllung weist wenigstens ein erstes Formteil und ein zweites Formteil auf. Eines der Formteile weist eine höhere Wärmeleitfähigkeit auf, als die übrigen Formteile. Die Formteile sind vorgesehen, wenigstens einen Elektrodenstapel wenigstens teilweise zu umschließen.

Unter einer galvanischen Zelle ist vorliegend eine Vorrichtung zu verstehen, welche auch der Abgabe von elektrischer Energie dient. Die galvanische Zelle speichert die Energie in chemischer Form. Vor Abgabe eines elektrischen Stroms wird die chemische Energie in elektrische Energie gewandelt. Unter Umständen ist die galvanische Zelle auch geeignet, elektrische Energie aufzunehmen, in chemische Energie zu wandeln und abzuspeichern. Man spricht dann von einer wiederaufladbaren galvanischen Zelle. Die Wandlung von elektrischer in chemische Energie oder umgekehrt ist verlustbehaftet und begleitet von unumkehrbaren chemischen Reaktionen. Die unumkehrbaren chemischen Reaktionen führen dazu, dass Bereiche der galvanischen Zelle zur Energiespeicherung und Energiewandlung nicht mehr zur Verfügung stehen. So nimmt die Speicherfähigkeit oder auch Ladekapazität der galvanischen Zelle mit zunehmender Anzahl von Entlade- und Ladevorgängen bzw. Ladezyklen ab. Auch mit zunehmender Betriebstemperatur einer galvanischen Zelle nehmen die unumkehrbaren chemischen Reaktionen zu. Die Gestalt einer galvanischen Zelle kann abhängig vom verfügbaren Raum am Einsatzort gewählt werden. Bevorzugt ist die galvanische Zelle im Wesentlichen zylindrisch oder prismatisch ausgebildet.

Vorliegend ist unter einem Elektrodenstapel die Anordnung wenigstens zweier Elektroden und einem dazwischen angeordneten Elektrolyt zu verstehen. Der Elektrolyt kann teilweise von einem Separator aufgenommen sein. Dann trennt der Separator die Elektroden.

Vorzugsweise weist wenigstens eine Elektrode, besonders bevorzugt wenigstens eine Kathode, eine Verbindung mit der Formel LiMPO₄ auf, wobei M wenigstens ein Übergangsmetallkation der ersten Reihe des Periodensystems der Elemente ist. Das Übergangsmetallkation ist vorzugsweise aus der Gruppe bestehend aus Mn, Fe, Ni und Ti oder einer Kombination dieser Elemente gewählt. Die Verbindung weist vorzugsweise eine Olivinstruktur auf, vorzugsweise übergeordnetes Olivin.

In einer weiteren Ausführungsform weist vorzugsweise wenigstens eine Elektrode, besonders bevorzugt wenigstens eine Kathode, ein Lithiummanganat, vorzugsweise LiMn₂O₄ vom Spinell-Typ, ein Lithiumkobaltat, vorzugsweise LiCoO₂, oder ein Lithiumnickelat, vorzugsweise LiNiO₂, oder ein Gemisch aus zwei oder drei dieser Oxide, oder ein Lithiummischoxid, welches Mangan, Kobalt und Nickel enthält, auf.

Vorzugsweise sind die negative und die positive Elektrode durch einen oder mehrere Separatoren voneinander getrennt. Solche Separatormaterialien können beispielsweise auch aus porösen anorganischen Materialien bestehen die so beschaffen sind, dass ein Stofftransport durch den Separator senkrecht zur Separatorschicht erfolgen kann, wohingegen ein Stofftransport parallel zur Separatorschicht behindert oder sogar unterdrückt wird.

Besonders bevorzugt sind dabei Separatormaterialien, die aus einem porösen anorganischen Material bestehen, das mit Partikeln durchsetzt ist oder solche Partikel wenigstens an seiner Oberfläche aufweist, die beim Erreichen oder Überschreiten einer Temperaturschwelle schmelzen und die Poren der Separatorschicht wenigstens lokal verkleinern oder verschließen. Solche Partikel können vorzugsweise aus einem Material bestehen, dass aus einer Gruppe von Materialien ausgewählt ist, die Polymere oder Mischungen von Polymeren, Wachse oder Mischungen dieser Materialien umfasst.

Besonders bevorzugt ist eine Ausführungsform der Erfindung, bei der die Separatorschicht derart ausgestaltet ist, dass sich ihre Poren aufgrund einer Kapillarwirkung mit dem beweglichen Bestandteil füllen, der als Edukt an der chemischen Reaktion beteiligt ist, so dass sich außerhalb der Poren der Separatorschicht nur ein relativ geringer Teil der in der galvanischen Zelle vorhandenen Gesamtmenge des beweglichen Bestandteils befindet. In diesem Zusammenhang ist der in der galvanischen Zelle befindliche Elektrolyt oder einer seiner chemischen Bestandteile oder eine Mischung solcher Bestandteile ein besonders bevorzugtes Edukt, der gemäß einem besonders bevorzugten Ausführungsbeispiel der Erfindung möglichst die gesamte poröse Separatorschicht benetzt oder durchtränkt, der jedoch außerhalb der Separatorschicht nicht oder nur in vernachlässigbarer oder verhältnismäßig geringer Menge anzutreffen ist. Eine solche Anordnung kann bei der Herstellung der galvanischen Zelles dadurch erhalten werden, dass der poröse Separator mit dem in der galvanischen Zelle befindlichen Elektrolyten oder einem anderen Edukt einer geeignet gewählten chemischen Reaktion getränkt wird, so dass dieses Edukt sich anschließend weitgehend nur in dem Separator befindet.

Kommt es nun aufgrund einer chemischen Reaktion zu einer möglicherweise zunächst nur lokalen Drucksteigerung durch Bildung einer Gasblase oder durch eine lokale Erwärmung, dann kann dieses Edukt nicht aus anderen Bereichen in das Reaktionsgebiet nachfließen. Soweit oder solange es noch nachfließen kann, wird die Verfügbarkeit dieses Eduktes an anderen Stellen entsprechend vermindert. Die Reaktion kommt schließlich zum Stillstand oder bleibt wenigstens auf ein vorzugsweise kleines Gebiet begrenzt.

Erfindungsgemäß wird vorzugsweise ein Separator verwendet, welcher nicht oder nur schlecht elektronenleitend ist, und welcher aus einem zumindest teilweise stoffdurchlässigen Träger besteht. Der Träger ist vorzugsweise auf mindestens einer Seite mit einem anorganischen Material beschichtet. Als wenigstens teilweise stoffdurchlässiger Träger wird vorzugsweise ein organisches Material verwendet, welches vorzugsweise als nicht verwebtes Vlies ausgestaltet ist. Das organische Material, welches vorzugsweise ein Polymer und besonders bevorzugt ein Polyethylenterephthalat (PET) umfasst, ist mit einem anorganischen, vorzugsweise ionenleitenden Material beschichtet, welches weiter vorzugsweise in einem Temperaturbereich von - 40° C bis 200° C ionenleitend ist. Das anorganische Material umfasst bevorzugt wenigstens eine Verbindung aus der Gruppe der Oxide, Phosphate, Sulfate, Titanate, Silikate, Aluminosilikate mit wenigstens einem der Elemente Zr, Al, Li, besonders bevorzugt Zirkonoxid. Bevorzugt weist das anorganische, ionenleitende Material Partikel mit einem größten Durchmesser unter 100 nm auf.

Ein solcher Separator wird beispielsweise unter dem Handelsnamen "Separion" von der Evonik AG in Deutschland vertrieben.

Der Elektrodenstapel dient auch zum Abspeichern chemischer Energie und zu deren Wandlung in elektrische Energie. Im Fall einer wiederaufladbaren galvanischen Zelle ist der Elektrodenstapel auch zur Wandlung von elektrischer in chemische Energie in der Lage. Beispielsweise sind die Elektroden plattenförmig oder folienartig ausgebildet. Der Elektrodenstapel kann auch aufgewickelt sein und eine im Wesentlichen zylindrische Gestalt aufweisen. Man spricht dann eher von einem Elektrodenwickel. Nachfolgend wird der Begriff Elektrodenstapel auch für Elektrodenwickel verwendet. Ein erster Elektrodenstapel und ein zweiter Elektrodenstapel sind vorzugsweise gleichartig ausgebildet. Der Elektrodenstapel kann Lithium oder ein anderes Alkalimetall auch in ionischer Form aufweisen.

Vorliegend ist unter einem Stromableiter eine Einrichtung zu verstehen, welche auch den Fluss von Elektronen aus einer Elektrode in Richtung einer weiteren elektrisch wirksamen Einrichtung, insbesondere ein elektrischer Verbraucher, ermöglicht. Der Stromableiter wirkt auch in entgegengesetzter Stromrichtung. Ein Stromableiter ist mit einem Elektrodenstapel elektrisch leitend verbunden. Ein Stromableiter kann mit einem Anschlusskabel verbunden sein. Die Gestalt eines Stromableiters ist an die Gestalt der galvanischen Zelle bzw. eines Elektrodenstapels angepasst. Vorzugsweise ist ein Stromableiter plattenförmig und/oder folienartig ausgebildet. Ein erster Stromableiter erstreckt sich teilweise aus der Umhüllung. Ein zweiter Stromableiter kann sich teilweise aus der Umhüllung erstrecken oder kann eine leitfähige Verbindung zwischen zwei Elektrodenstapeln bilden. Bevorzugt weist jede Elektrode des Elektrodenstapels einen eigenen Stromableiter auf bzw. Elektroden gleicher Polarität sind mit einem gemeinsamen Stromableiter verbunden.
Vorzugsweise ist ein Stromableiter teilweise beschichtet, wobei die Beschichtung insbesondere elektrisch isolierend ausgebildet ist.

Vorliegend ist unter der Umhüllung eine Einrichtung zu verstehen, welche auch den Austritt von Chemikalien aus dem Elektrodenstapel in die Umgebung verhindert. Weiter schützt die Umhüllung die chemischen Bestandteile des Elektrodenstapels vor unerwünschter Wechselwirkung mit der Umgebung. Beispielsweise schützt die Umhüllung den Elektrodenstapel vor dem Zutritt von Wasser oder Wasserdampf aus der Umgebung. Die Umhüllung kann folienartig ausgebildet sein. Die Umhüllung soll den Durchtritt von Wärmeenergie möglichst wenig beeinträchtigen. Vorliegend weist die Umhüllung wenigstens zwei Formteile auf. Bevorzugt ist die Umhüllung wenigstens teilweise an die Gestalt der Elektrodenstapel angepasst.

Vorliegend ist unter einem Formteil ein Festkörper zu verstehen, welcher an die Gestalt eines Elektrodenstapels angepasst ist. Unter Umständen gewinnt ein Formteil erst in Zusammenwirkung mit einem weiteren Formteil und/oder einem Elektrodenstapel seine Form. Im Fall eines quaderförmigen Elektrodenstapels können die Formteile im Wesentlichen rechteckig zugeschnitten sein. Dabei sind einige Abmessungen des Formteils vorzugsweise größer als bestimmte Abmessungen eines Elektrodenstapels gewählt. Wenn zwei Formteile um den Elektrodenstapel gelegt werden, so ragen die Formteile teilweise über den Elektrodenstapel hinaus und bilden teilweise einen überstehenden Rand. Ein Randbereich eines Formteiles berührt dabei vorzugsweise einen Randbereich eines weiteren Formteils, vorzugsweise flächig. Beispielsweise ist ein Formteil als ebene Platte ausgebildet, während ein weiteres Formteil sich um den Elektrodenstapel an das erste Formteil schmiegt.
Ein Formteil weist eine höhere Wärmeleitfähigkeit als die übrigen Formteile auf und berührt wenigstens einen Elektrodenstapel teilweise und wärmeleitend. Abhängig von einem Temperaturunterschied zwischen dem Formteil und einem Elektrodenstapel wird Wärmeenergie aus einem Elektrodenstapel heraus oder in einem Elektrodenstapel hinein übertragen.
Vorzugsweise ist ein Formteil zwischen zwei Elektrodenstapeln angeordnet und berührt beide Elektrodenstapel wärmeleitend.

Vorliegend ist unter Umschließen zu verstehen, dass ein Formteil bereichsweise in Berührung mit einem weiteren Formteil gebracht werden kann. Dabei kommt wenigstens ein Elektrodenstapel zwischen den beteiligten Formteilen zu liegen. Nach dem Umschließen berühren sich wenigstens zwei Formteile bereichsweise flächig, vorzugsweise wenigstens entlang einer begrenzenden Kante bzw. eines Randbereichs eines beteiligten Formteils.

Zur Versorgung eines KFZ-Antriebs werden der Batterie zeitweise hohe elektrische Ströme entnommen, welche zu einer merklichen Erwärmung der galvanischen Zellen einer Batterie führen können. Mit steigender Temperatur nehmen in einer galvanischen Zelle auch unumkehrbare chemische Reaktionen zu. Erfindungsgemäß wird die Umhüllung der galvanischen Zelle mit einem Formteil ausgebildet, welches sich gegenüber den übrigen Teilen der Umhüllung durch eine merklich erhöhte Wärmeleitfähigkeit auszeichnet. So kann der thermische Widerstand merklich verringert und der Wärmestrom in einen Elektrodenstapel oder aus einem Elektrodenstapel erhöht werden. So kann eine Heizleistung in einer galvanischen Zelle bei geringerem Temperaturunterschied abgeführt werden.

Mit der Begrenzung der Betriebstemperatur einer galvanischen Zelle werden unumkehrbare chemische Reaktionen verringert, die Ladekapazität der galvanischen Zelle weitgehend erhalten, die Betriebsdauer erhöht und die zugrunde liegende Aufgabe gelöst.

Nachfolgend werden zu bevorzugende Weiterbildungen der Erfindung beschrieben.

Vorteilhaft sind wenigstens zwei Formteile der Umhüllung vorgesehen, miteinander verbunden zu werden. Die Verbindung erfolgt beispielsweise kraftschlüssig oder vorzugsweise stoffschlüssig. Abhängig von den Werkstoffen der verschiedenen Formteile werden diese beispielsweise durch Kleben oder ein Schweißverfahren miteinander verbunden. Insbesondere das Ultraschallschweißen oder das Laserschweißen kann zur Verbindung von wenigstens zwei Formteilen Anwendung finden. Dabei ist möglicherweise eine Vorbehandlung bzw. Aktivierung wenigstens einer der Oberflächen eines beteiligten Formteils dienlich. Eine kraft- oder stoffschlüssige Verbindung verbindet Formteile derart, dass vorzugsweise eine umlaufende streifenförmige Verbindung den Raum zwischen den Formteilen gegenüber der Umgebung abdichtet. Zur Haftverbesserung können auch eingelegte Streifen Anwendung finden, beispielsweise ein Siegelband. Vorzugsweise werden wenigstens zwei Formteile in einem ersten Verbindungsbereich insbesondere stoffschlüssig miteinander verbunden. Dieser erste Verbindungsbereich verläuft vorzugsweise entlang eines Randbereichs eines beteiligten Formteils. Der erste Verbindungsbereich ist dabei streifenförmig ausgebildet. Es ist nicht erforderlich, dass der erste Verbindungsbereich gänzlich entlang der begrenzenden Kanten des Formteils umläuft. Vor der Verbindung der beteiligten Formteile können weitere Einlegeteile so angeordnet werden, dass diese ebenfalls mit den Formteilen kraft- oder stoffschlüssig verbunden werden. Insbesondere werden Stromableiter so eingelegt, dass sich diese teilweise aus der Umhüllung erstrecken. So ist die Umhüllung auch in den Bereichen der Stromableiter gasdicht gegenüber der Umgebung.

Vorteilhaft weist wenigstens ein Formteil der Umhüllung einen Wärmeübergangsbereich auf. Dieser Wärmeübergangsbereich dient auch der Verbesserung der Wärmeübertragung in einen Elektrodenstapel hineinoder aus diesem heraus. Vorzugsweise ist der Wärmeübergangsbereich von einem ersten Temperiermittel angeströmt und/oder ist in wärmeleitender Berührung mit einem Temperierelement. Ein Wärmeübergangsbereich eines Formteils kann auch einem überwiegenden Teil der Oberfläche des Formteils entsprechen. Der Wärmeübergangsbereich kann gleichzeitig auch zur Befestigung der galvanischen Zelle an einem Temperierelement dienen, beispielsweise durch Schrauben, Nieten, Kleben oder Schweißen.

Vorzugsweise ist wenigstens ein Formteil der Umhüllung biegesteif ausgeführt. Dieses Formteil kann einem Elektrodenstapel Halt geben, den Elektrodenstapel vor mechanischer Beschädigung bewahren oder der mechanischen Verbindung der galvanischen Zelle mit einer Aufnahmevorrichtung dienen. Vorzugsweise ist dieses Formteil als Metallplatte bzw. Metallblech ausgebildet. Das Formteil kann beispielsweise durch Sicken, hochgestellte Randbereiche oder Rippen versteift sein.
Vorzugsweise ist wenigstens ein Formteil der Umhüllung dünnwandig ausgeführt. Vorzugsweise ist die Wandstärke zur Anpassung des wenigstens einen Formteils an eine mechanische, elektrische oder thermische Beanspruchung ausgebildet. Dabei muss die Wandstärke nicht gleichförmig sein. Ein Bereich eines dünnwandigen Formteils mit erhöhter Wandstärke kann als Wärmesenke oder Wärmereservoir wirken und so dazu beitragen, dass Wärmeenergie aus dem Elektrodenstapel abgeführt oder in diesen transportiert wird. Auch spart die dünnwandige Ausbildung eines Formteils Gewicht und Platz. Vorzugsweise ist wenigstens ein Formteil als Folie, besonders bevorzugt als Verbundfolie, ausgebildet. Als Werkstoffe für die Verbundfolie kommen auch Metalle oder Kunststoffe in Frage.

Vorzugsweise weist wenigstens ein Formteil der Umhüllung wenigstens bereichsweise eine Beschichtung auf. Diese Beschichtung dient auch zur Anpassung an Beanspruchungen, denen das Formteil ausgesetzt ist. Beispielsweise dient die Beschichtung zur elektrischen Isolation, zum Schutz des Formteils gegen die Chemikalien der galvanischen Zelle, zur Haftverbesserung für eine Klebeverbindung, zur Verbesserung der Wärmeleitfähigkeit oder zum Schutz gegen schädigende Einwirkungen aus der Umgebung. Eine Beschichtung kann eine chemische Aktivierung der Oberfläche des Formteils bewirken. Eine Beschichtung ist vorzugsweise aus einem Werkstoff, der von dem Werkstoff des Formteils abweicht. Das wenigstens eine Formteil kann auch mehrere verschiedene Beschichtungen aufweisen, welche auch an unterschiedlichen Orten des Formteils angeordnet sein können. Wenn ein Formteil in elektrischem Kontakt mit einem Elektrodenstapel steht, dann ist ein Stromableiter gegenüber diesem Formteil bevorzugt elektrisch isoliert.

Vorteilhaft weist wenigstens ein Formteil der Umhüllung eine Ausnehmung auf, insbesondere eine Schale. Mit dieser Gestaltung gewinnt das Formteil auch ein erhöhtes Flächenträgheitsmoment bzw. Biegesteifigkeit. Vorzugsweise nimmt diese Ausnehmung einen Elektrodenstapel wenigstens teilweise auf. Das dient auch dem Schutz eines Elektrodenstapels. Die Wandstärke eines Formteils mit Ausnehmung ist vorzugsweise an die Beanspruchung angepasst. Mehrere Formteile der Umhüllung können Ausnehmungen aufweisen, welche gemeinsam einen Raum zur Aufnahme eines Elektrodenstapels bilden. Vorzugsweise ist ein Formteil als tiefgezogenes oder kaltfließgepresstes Metallblech ausgebildet. Vorzugsweise ist ein Formteil als tiefgezogene Kunststoffplatte, Verbundfolie oder Kunststofffolie ausgebildet. Ein Formteil der Umhüllung mit einer Ausnehmung weist zusätzlich wenigstens einen ersten Verbindungsbereich auf, der zum Verbinden mit einem weiteren Formteil vorgesehen ist.

Vorteilhaft weist wenigstens ein Formteil einen zweiten Verbindungsbereich auf. Der zweite Verbindungsbereich dient auch der Befestigung der galvanischen Zelle beispielsweise in einem Gehäuse, in einem Rahmen oder auf einer Grundplatte. Vorzugsweise ist ein zweiter Verbindungsbereich derart ausgebildet, dass die Verbindung des betreffenden Formteils mit einem weiteren Körper nur in vorbestimmter Weise erfolgt.
Beispielsweise weist ein zweiter Verbindungsbereich eine geometrische Gestalt auf, welche einem Bereich eines weiteren Körpers entspricht.
Vorzugsweise kann mittels einer Anordnung von Formelementen, beispielsweise Löcher und Zapfen, eine Verbindung zwischen dem Formteil und dem weiteren Körper nur in vorbestimmter Weise möglich sein. Auch kann die Anordnung von Durchgangslöchern oder Gewinden eine Verbindung nur in vorbestimmter Weise gestatten. Vorzugsweise ist ein zweiter Verbindungsbereich räumlich getrennt von einem ersten Verbindungsbereich. Wenigstens ein Formteil der Umhüllung weist vorzugsweise mehrere getrennte zweite Verbindungsbereiche auf. Die Verbindung des Formteils mit einem anderen Körper erfolgt beispielsweise mittels Nieten, Schrauben, Schweißen oder Kleben. Vorzugsweise fallen ein zweiter Verbindungsbereich eines Formteils und ein Wärmeübergangsbereich desselben Formteils zusammen. In diesen Bereichen ist das Formteil mit beispielsweise mit einem Temperierelement, einem Rahmen oder mit einer Grundplatte des Batteriegehäuses verbunden.

Vorteilhaft sind wenigstens zwei Elektrodenstapel einer erfindungsgemäßen galvanischen Zelle miteinander elektrisch leitend verbunden. Die elektrisch leitende Verbindung kann mittelbar über die Stromableiter der Elektrodenstapel hergestellt sein. Die Verbindung kann eine elektrische Reihenschaltung der Elektrodenstapel oder deren Parallelschaltung bewirken. Es sind jeweils ein erster Stromableiter mit einem ersten Elektrodenstapel und ein zweiter Stromableiter mit einem zweiten Elektrodenstapel verbunden. Wenn sich beide Stromableiter teilweise aus der Umhüllung erstrecken, dann kann die elektrisch leitende Verbindung der Stromableiter bzw. der Elektrodenstapel außerhalb der Umhüllung erfolgen. Beispielsweise ragen zwei Stromableiter über den Rand eines Formteils hinaus. Dabei kann wenigstens ein Stromableiter sich in Richtung eines weiteren Stromableiters erstrecken und diesen teilweise elektrisch leitend berühren bzw. verbunden sein. Weiter kann wenigstens ein Stromableiter teilweise elektrisch isolierend beschichtet sein.

Vorteilhaft weist wenigstens ein Formteil wenigstens einen Durchbruch insbesondere innerhalb der Umhüllung auf. Ein Durchbruch ist durch Kanten begrenzt, welche vorzugsweise elektrisch isolierend beschichtet. Ein zweiter Stromableiter ist durch einen Durchbruch eines Formteils geführt. Vorzugsweise ist ein zweiter Stromableiter zur Abdichtung eines Durchbruchs ausgebildet und/oder teilweise elektrisch isolierend beschichtet. Ein Bereich eines zweiten Stromableiters ist wenigstens teilweise elektrisch leitend mit einem ersten Stromableiter verbunden. Vorzugsweise werden wenigstens zwei Elektrodenstapel elektrisch in Reihe geschaltet. Eine galvanische Zelle mit zwei Elektrodenstapeln kann auch nur zwei herausgeführte Stromableiter unterschiedlicher Polarität aufweisen.

Vorteilhaft werden wenigstens zwei galvanische Zellen zu einer Batterie gruppiert. Dabei werden die wenigstens zwei galvanischen Zellen bevorzugt parallel zueinander angeordnet. Prismatischen oder quaderförmige Zellen werden bevorzugt flächig miteinander in Berührung gebracht und können ein im Wesentlichen quaderförmiges Paket bilden.
Weiter ist der Batterie wenigstens ein Temperierelement zugeordnet. Das Temperierelement weist eine vorbestimmte Temperatur auf, welche zeitlich veränderlich sein kann. Die Temperatur des Temperierelements wird bevorzugt in Abhängigkeit von der Temperatur eines Elektrodenstapels einer galvanischen Zelle gewählt. Ein vorbestimmtes Temperaturgefälle verursacht einen Wärmestrom in diesen Elektrodenstapel hinein bzw. aus diesem Elektrodenstapel hinaus. Dabei tauscht das Temperierelement mit einem Elektrodenstapel Wärmeenergie über wenigstens ein Formteil bzw. dessen Wärmeübergangsbereich aus, welcher mit dem Temperierelement in Berührung steht. Auch können die vorhandenen galvanischen Zellen insbesondere kraft- oder stoffschlüssig über einen zweiten Verbindungsbereich mit dem Temperierelement verbunden sein.

Vorteilhaft weist das Temperierelement wenigstens einen ersten Kanal auch zur Einstellung einer vorgegebenen Temperatur des Temperierelements auf. Vorzugsweise ist dieser Kanal mit einem zweiten Temperiermittel gefüllt. Besonders bevorzugt durchströmt ein zweites Temperiermittel diesen wenigstens einen Kanal. Dabei führt das strömende zweite Temperiermittel dem Temperierelement Wärmeenergie zu oder führt Wärmeenergie ab. Das wenigstens eine Temperierelement ist vorzugsweise mit einem Wärmetauscher wirkverbunden. Der Wärmetauscher führt Wärmeenergie aus diesem Temperierelement ab oder führt diesem Temperierelement Wärmeenergie zu, insbesondere mittels des zweiten Temperiermittels. Der Wärmetauscher bzw. das Temperiermittel können auch mit der Klimaanlage eines Kraftfahrzeugs wechselwirken. Der Wärmetauscher kann eine elektrische Heizeinrichtung aufweisen.

Vorteilhaft wird eine Batterie mit wenigstens zwei galvanischen Zellen so betrieben, dass wenigstens ein Formteil einer galvanischen Zelle von einem ersten Temperiermittel angeströmt wird. Beispielsweise wird als erstes Temperiermittel Umgebungsluft oder ein Kältemittel der Klimaanlage des KFZ verwendet. Das erste Temperiermittel kann eine höhere oder geringere Temperatur als das wenigstens eine Formteil, dessen Wärmeübergangsbereich oder als ein Elektrodenstapel aufweisen.

Vorteilhaft wird eine erfindungsgemäße galvanische Zelle so hergestellt, dass zunächst wenigstens zwei Formteile der Umhüllung um einen Elektrodenstapel zusammengelegt werden. Dabei können die Stromableiter der galvanischen Zelle eingelegt werden. Die zwei Formteile werden anschließend insbesondere stoffschlüssig miteinander verbunden, so dass eine insbesondere umlaufende Verbindung von wenigstens zwei Formteilen erzeugt wird. So wird bevorzugt eine gasdichte Umhüllung um den Elektrodenstapel erzeugt.

Anschließend wird wenigstens ein Formteil durch Biegen, insbesondere durch Hochstellen wenigstens eines Randbereichs des Formteils in einen verformten Zustand überführt. Vorzugsweise wird der erste Verbindungsbereich wenigstens teilweise abgekantet. Dabei kann sich eine Abmessung des wenigstens einen Formteils verringern. Vorteilhaft bewirken die hochgestellten Bereiche des Formteils einen zusätzlichen mechanischen Schutz des Elektrodenstapels. Vorteilhaft erhöht ein hochgestellter Randbereich das Flächenträgheitsmoment des betreffenden Formteils.

Weitere Vorteile, Merkmale und Anwendungsmöglichkeiten der vorliegenden Erfindung ergeben sich aus der nachfolgenden Beschreibung im Zusammenhang mit den Figuren. Es zeigen:
- Fig. 1: eine perspektivische Ansicht einer erfindungsgemäßen galvanischen Zelle mit zwei Elektrodenstapeln.
- Fig. 2: eine Explosionsdarstellung einer erfindungsgemäßen galvanischen Zelle mit zwei Elektrodenstapeln.
- Fig. 3: eine Seitenansicht und einen Schnitt durch eine erfindungsgemäße galvanische Zelle mit zwei Elektrodenstapeln.
- Fig. 4: einen ausschnittsvergrößerten Schnitt durch eine erfindungsgemäße galvanische Zelle mit zwei Elektrodenstapeln.
- Fig. 5: eine perspektivische Ansicht einer erfindungsgemäßen galvanischen Zelle mit zwei Elektrodenstapeln mit verbundenen Stromableitern.
- Fig. 6: einen ausschnittsvergrößerten Schnitt durch eine erfindungsgemäße galvanische Zelle mit zwei Elektrodenstapeln und verbundenen Stromableitern.
- Fig. 7: eine erfindungsgemäße galvanische Zelle mit zwei Elektrodenstapeln, welche intern elektrisch in Reihe geschaltet sind.
- Fig. 8: eine Explosionsdarstellung der galvanischen Zelle aus Figur 7.
- Fig. 9: eine perspektivische Ansicht eines Formteils mit Durchbruch der galvanischen Zellen aus den Figuren 7 und 8.
- Fig. 10: einen vergrößerten Ausschnitt einer erfindungsgemäßen galvanischen Zelle mit zwei Elektrodenstapeln und innerer Reihenschaltung.

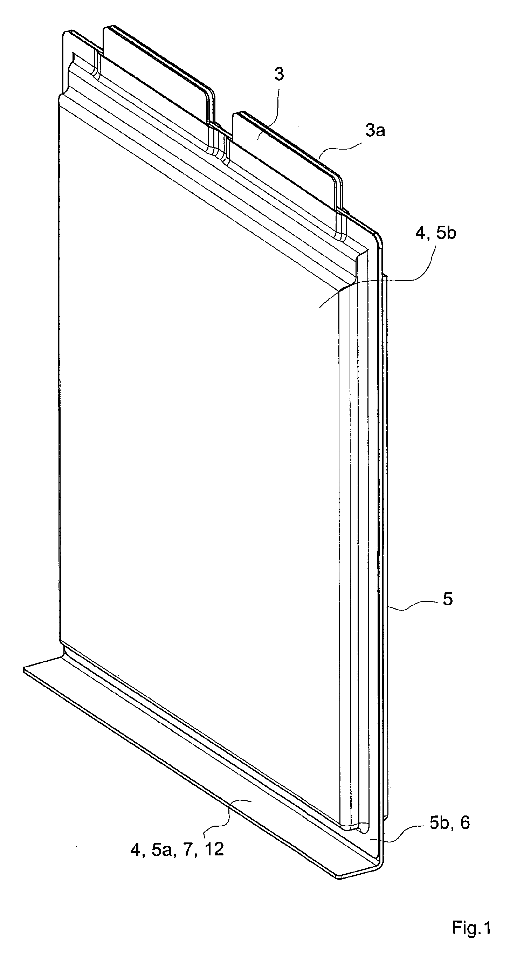

Figur 1 zeigt eine erfindungsgemäße galvanische Zelle mit zwei Elektrodenstapeln. Formteil 5a ist als Metallblech ausgebildet. Entlang der unteren Kante ist das Formteil 5a teilweise umgebogen. Der hochgestellte Bereich wirkt als Wärmeübergangsbereich 7 und als zweiter Befestigungsbereich 12. Beiderseits des Formteils 5a ist jeweils ein Elektrodenstapel (nicht dargestellt) angeordnet. Mit dem ersten Elektrodenstapel sind die ersten Stromableiter 3, 3a verbunden. Diese erstrecken sich teilweise aus der Umhüllung 4. Die Umhüllung 4 weist weiter zwei weitere Formteile 5, 5b auf, welche mittels eines ersten Verbindungsbereichs 6 mit dem dazwischen angeordneten Formteil 5a stoffschlüssig verbunden sind. Die Elektrodenstapel werden so gegen Verrutschen gesichert. Formteil 5a stützt dabei die Elektrodenstapel. Weiter dient das Formteil 5a zum Austausch von Wärmeenergie mit den Elektrodenstapeln der galvanischen Zelle. Nicht dargestellt ist ein Temperierelement, mit welchem das Formteil 5a mittels des zweiten Verbindungsbereichs 12 stoffschlüssig und mittels des Wärmeübergangsbereichs 7 wärmeleitend verbunden ist.

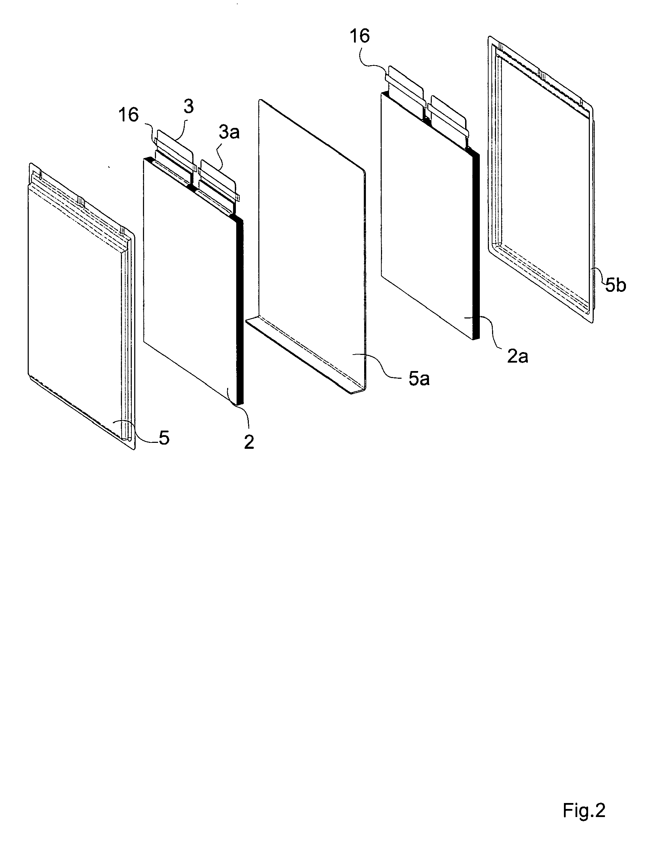

Figur 2 zeigt eine erfindungsgemäß galvanische Zelle mit zwei Elektrodenstapeln 2, 2a vor dem Schließen der Umhüllung. Auch ist dargestellt, dass vor der Herstellung der stoffschlüssigen Verbindung Siegelbänder 16 gemeinsam mit den Stromableitern 3, 3a zwischen die Formteile 5, 5a, 5b gelegt werden.

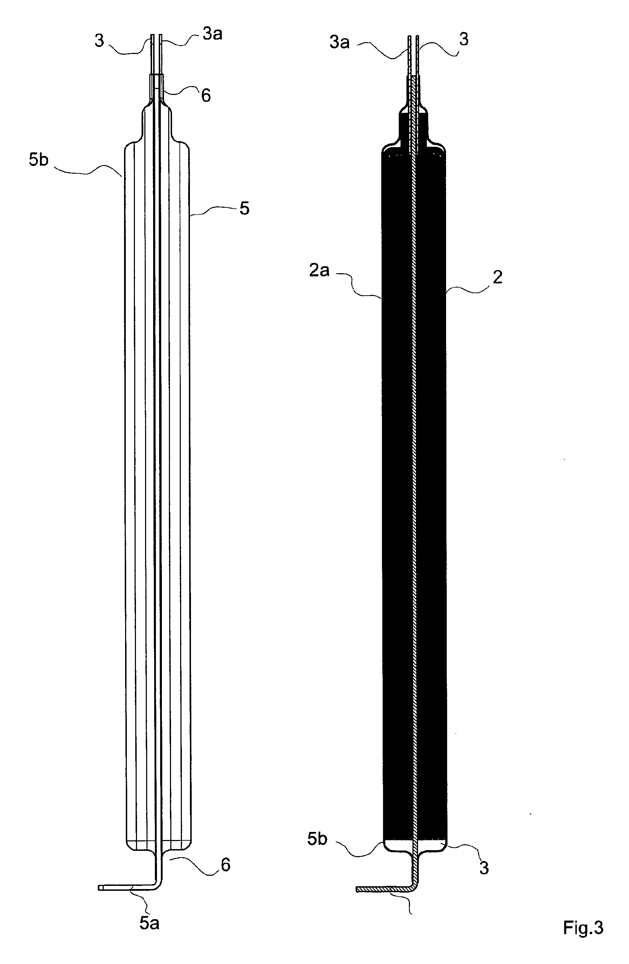

Figur 3 zeigt eine Seitenansicht einer erfindungsgemäßen galvanischen Zelle mit zwei Elektrodenstapeln gemäß Figur 1. In der Schnittdarstellung der Figur sind die Elektrodenstapel 2, 2a zu sehen. Diese weisen jeweils mehrere Anodenschichten, Kathodenschichten und Separatorschichten auf. Von den Separatorschichten ist der Elektrolyt teilweise aufgenommen.

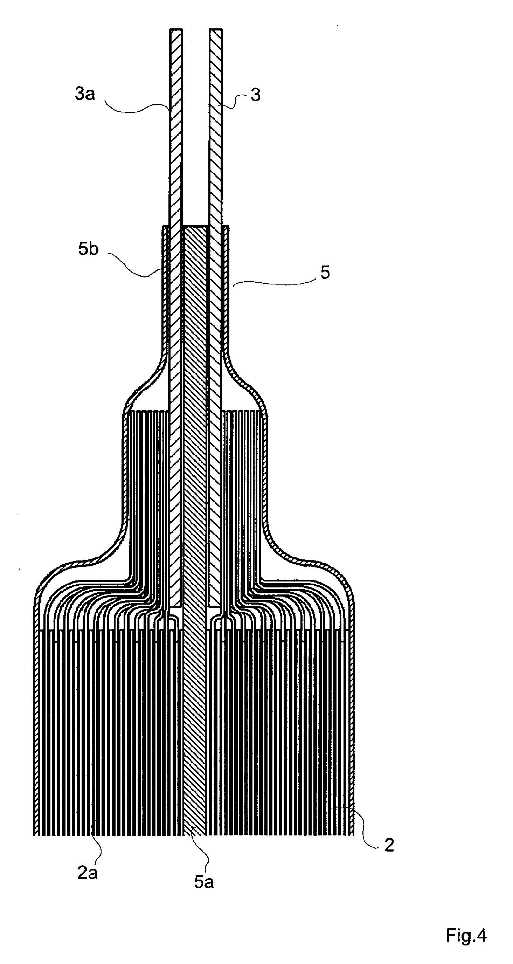

Figur 4 zeigt als Vergrößerung einen Teil der galvanischen Zelle aus Figur 3. Es ist dargestellt, dass ein Elektrodenstapel zahlreiche Anoden und Kathoden aufweist, welche über Strombänder mit den ersten Stromableitern 3, 3a verbunden sind. In diesem Fall ist die Verbindung durch Schweißen erzeugt. Auch ist dargestellt, dass die Elektroden 2, 2a beiderseits des Formteils 5a angeordnet sind und dieses Formteil 5a wärmeleitend berühren.

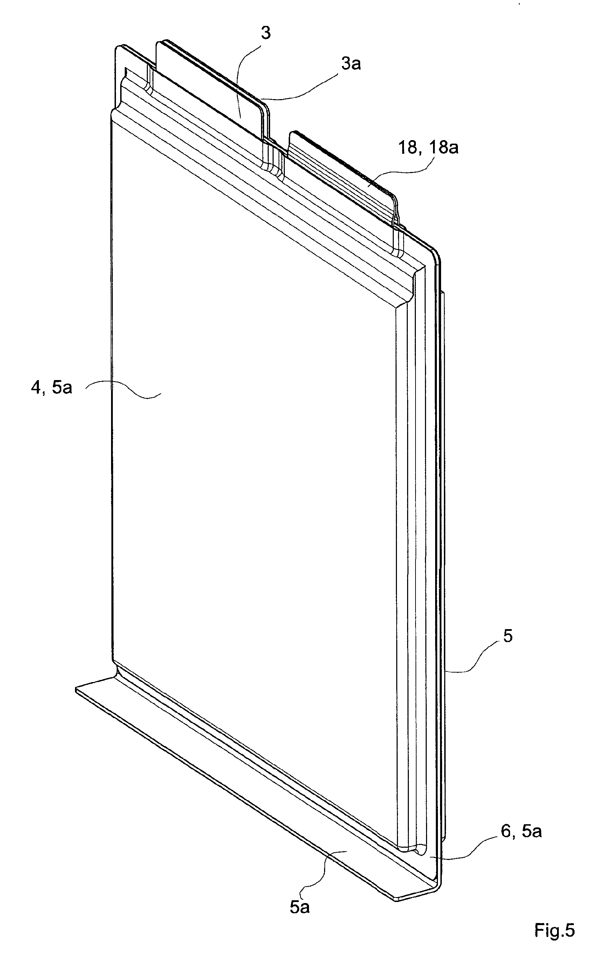

Figur 5 zeigt eine erfindungsgemäße galvanische Zelle mit zwei Elektrodenstapeln, welche miteinander elektrisch verschaltet sind. Dazu sind die zweiten Stromableiter 18, 18a außerhalb der Umhüllung 4 stoffschlüssig und elektrisch leitend miteinander verbunden. Mit der Verbindung zweiter Stromableiter unterschiedlicher Polarität werden die Elektrodenstapel in Reihe geschaltet.

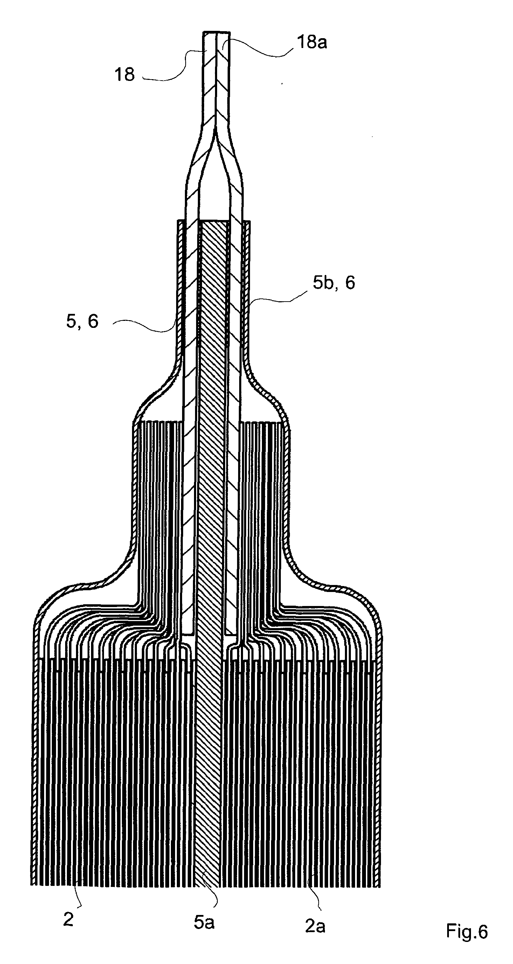

Figur 6 zeigt einen vergrößerten Ausschnitt der galvanischen Zelle aus Figur 5. Es ist dargestellt, dass die zweiten Stromableiter 18, 18a oberhalb des Formteils 5a so abgewinkelt sind, dass sie einander flächig und elektrisch leitend berühren.

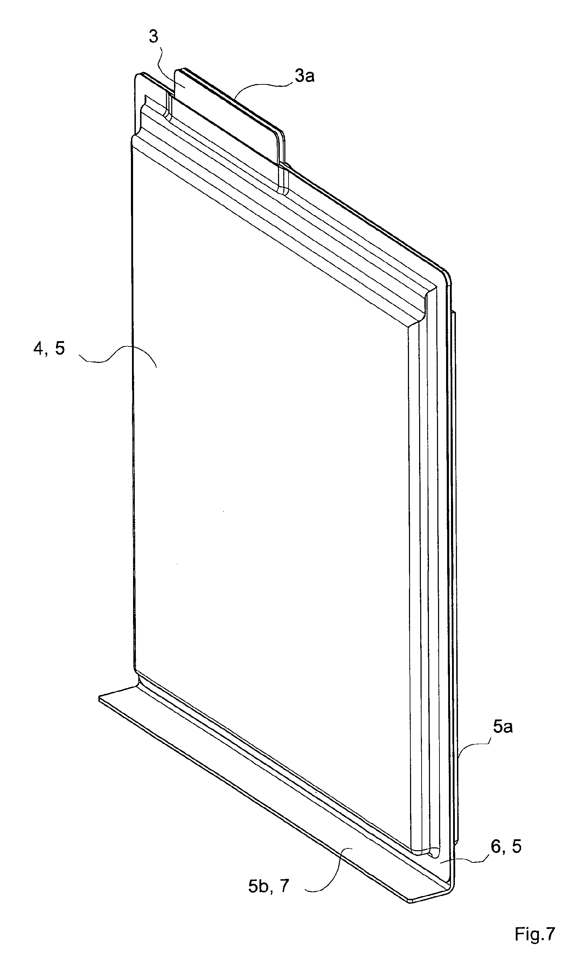

Figur 7 zeigt eine erfindungsgemäße galvanische Zelle mit Elektrodenstapeln, die miteinander verschaltet sind. Aus der Umhüllung 4 ragen nur zwei erste Stromableiter 3, 3a unterschiedlicher Polarität. Nicht dargestellt ist, dass die beiden Elektrodenstapel innerhalb der Umhüllung 4 mittels eines zweiten Stromableiters elektrisch leitend verbunden und in Reihe geschaltet sind. Auch kann die Verschaltung als Parallelschaltung ausgeführt werden.

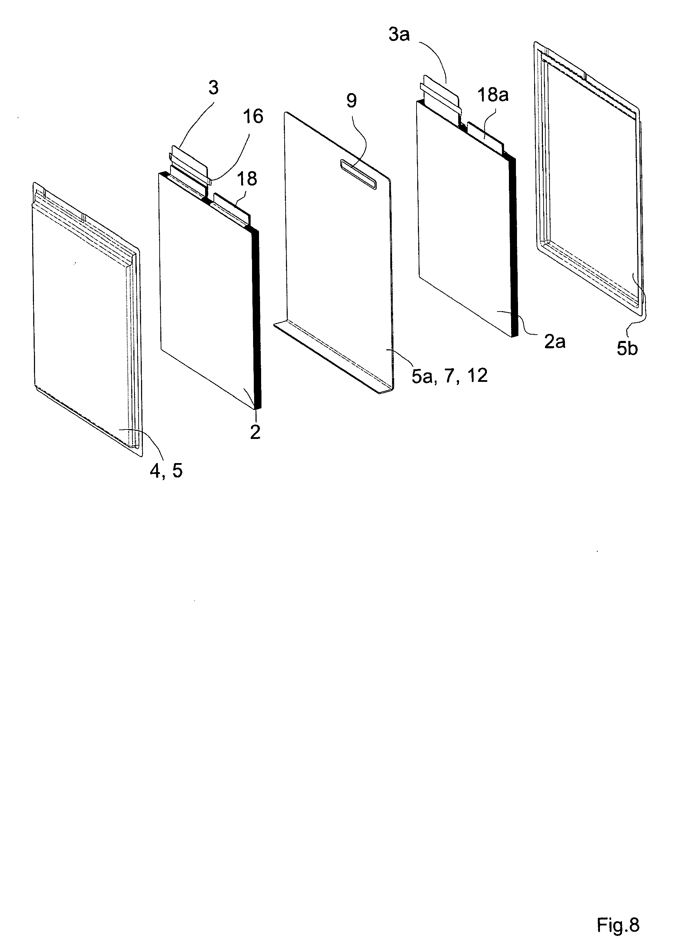

Figur 8 zeigt die galvanische Zelle aus Figur 7 vor dem Schließen der Umhüllung 4. Das in der Mitte angeordnete und als Metallblech ausgebildete Formteil 5a weist einen Durchbruch 9 auf. Die Ränder dieses Durchbruchs sind elektrisch isolierend beschichtet 10. Die zweiten Stromableiter 18, 18a sind so ausgebildet, dass sie einander im Bereich des Fensters von Durchbruch 9 elektrisch leitend berühren. Dabei ragen die zweiten Stromableiter 18, 18a nicht aus der Umhüllung 4.

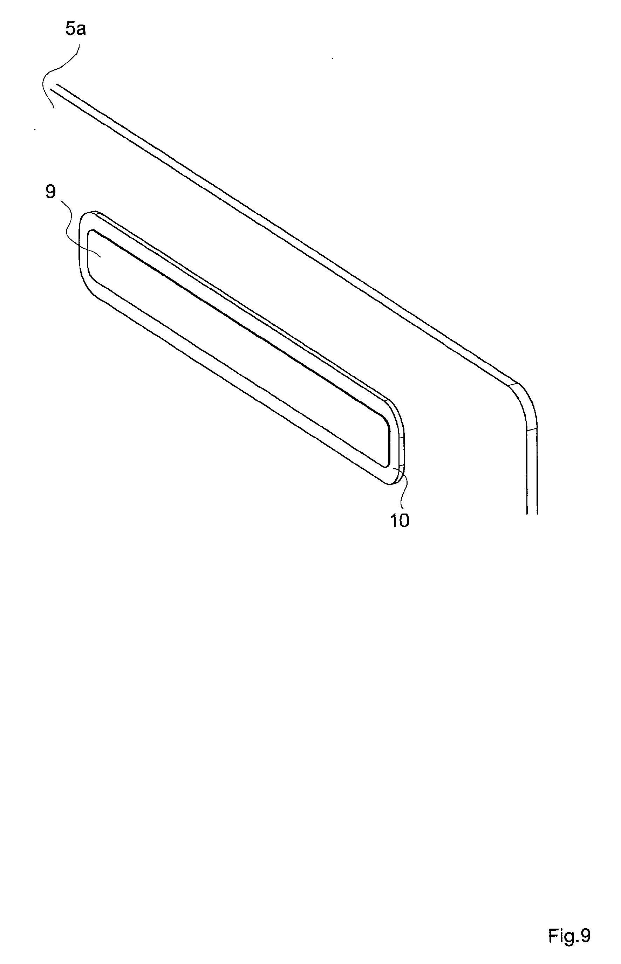

Figur 9 zeigt ausschnittsvergrößert das biegesteife und als Metallblech ausgebildete Formteil 5a mit einem Durchbruch 9. Auch dargestellt ist die bereichsweise Beschichtung 10 des Formteils 5a entlang der Ränder des Durchbruchs 9. Diese Beschichtung 10 ist aus einem Polymerwerkstoff elektrisch isolierend ausgebildet.

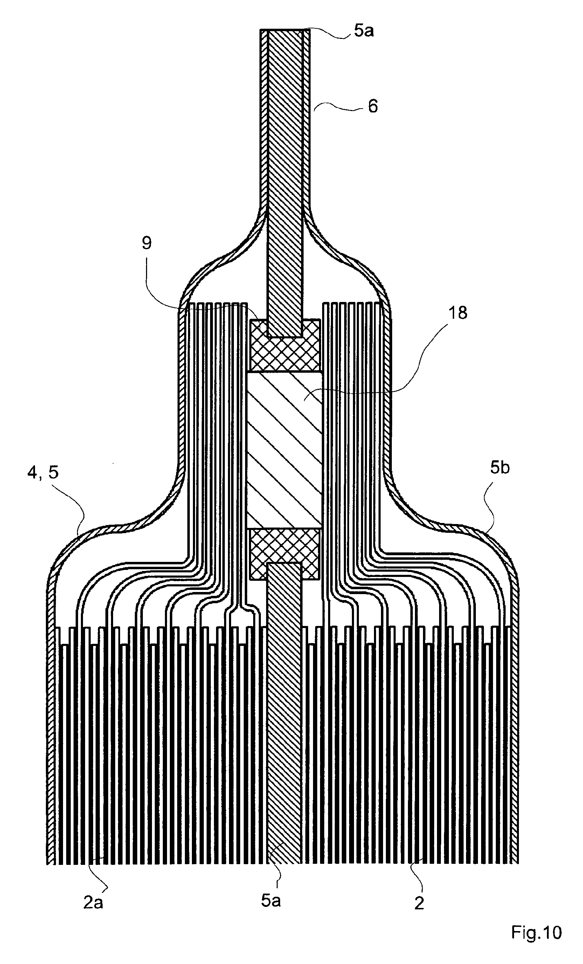

Figur 10 zeigt eine alternative Ausführung der galvanischen Zelle gemäß Figur 7. Dargestellt ist ein vergrößerter Ausschnitt im Bereich des Durchbruchs 9 im Formteil 5a. Die beiden Elektrodenstapel 2, 2a sind über Ableiterfahnen mit einem zweiten Stromableiter 18 verschweißt. Der zweite Stromableiter 18 ist innerhalb des Durchbruchs 9 angeordnet. Der zweite Stromableiter 18 ist elektrisch gegenüber dem Formteil 5a durch die isolierende Beschichtung 10 getrennt. Die Beschichtung 10 und der zweite Stromableiter 18 sind hinsichtlich ihrer Abmaße so aufeinander abgestimmt, dass der zweite Stromableiter 18 den Durchbruch 9 auch abdichtet. Die beiden Räume der Umhüllung 4, welche die Elektrodenstapel 2, 2a aufnehmen, können jeweils hermetisch abgedichtet sein.

## Patentansprüche

1. Galvanische Zelle (1) von insbesondere im Wesentlichen prismatischer Gestalt, welche wenigstens aufweist:
einen ersten Elektrodenstapel (2),
einen ersten Stromableiter (3, 3a), welcher mit einem ersten Elektrodenstapel (2) verbunden ist,
und eine Umhüllung (4), welche einen ersten Elektrodenstapel (2) wenigstens teilweise umschließt, wobei ein erster Stromableiter (3, 3a) sich teilweise aus der Umhüllung (4) erstreckt,
**dadurch gekennzeichnet,**
**dass** die galvanische Zelle (1) weiter einen zweiten Elektrodenstapel (2a) und einen zweiten Stromableiter (18, 18a) aufweist,
**dass** die Umhüllung (4) wenigstens ein erstes Formteil (5a) und ein zweites Formteil (5b) aufweist, wobei ein Formteil eine höhere Wärmeleitfähigkeit aufweist als die übrigen Formteile,
und **dass** die Formteile (5, 5a, 5b) weiter vorgesehen sind, wenigstens einen Elektrodenstapel (2, 2a) wenigstens teilweise zu umschließen.

2. Galvanische Zelle (1) gemäß einem der vorhergehenden Ansprüche, **dadurch gekennzeichnet, dass** wenigstens zwei Formteile (5, 5a, 5b) der Umhüllung (4) vorgesehen sind, wenigstens teilweise und insbesondere stoffschlüssig miteinander verbunden zu werden, wobei wenigstens zwei Formteile (5, 5a, 5b) der Umhüllung (4) vorgesehen sind, in einem ersten Verbindungsbereich (6) insbesondere stoffschlüssig miteinander verbunden zu werden.

3. Galvanische Zelle (1) gemäß einem der vorhergehenden Ansprüche, **dadurch gekennzeichnet, dass** wenigstens ein Formteil (5, 5a, 5b) der Umhüllung (4) einen Wärmeübergangsbereich (7) aufweist, welcher insbesondere zur Berührung mit einem Temperierelement (8) und/oder mit einem ersten Temperiermittel (14) vorgesehen ist.

4. Galvanische Zelle (1) gemäß einem der vorhergehenden Ansprüche, **dadurch gekennzeichnet, dass** wenigstens ein Formteil (5, 5a, 5b) der Umhüllung (4) biegesteif ausgeführt ist und/oder dass wenigstens ein Formteil (5, 5a, 5b) der Umhüllung (4) dünnwandig ausgeführt ist.

5. Galvanische Zelle (1) gemäß einem der vorhergehenden Ansprüche, **dadurch gekennzeichnet, dass** wenigstens ein Formteil (5, 5a, 5b) der Umhüllung (4) wenigstens bereichsweise eine Beschichtung (10) aufweist.

6. Galvanische Zelle (1) gemäß einem der vorhergehenden Ansprüche, **dadurch gekennzeichnet, dass** wenigstens ein Formteil (5, 5a, 5b) der Umhüllung (4) eine Ausnehmung (11) insbesondere zur Aufnahme eines Elektrodenstapels (2) aufweist.

7. Galvanische Zelle (1) gemäß einem der vorhergehenden Ansprüche, **dadurch gekennzeichnet, dass** wenigstens ein Formteil (5, 5a, 5b) der Umhüllung (4) einen zweiten Verbindungsbereich (12) aufweist.

8. Galvanische Zelle (1) gemäß einem der vorhergehenden Ansprüche, **dadurch gekennzeichnet, dass** ein erster Stromableiter (3, 3a) mit einem ersten Elektrodenstapel (2) verbunden ist,
dass ein zweiter Stromableiter (18, 18a) mit einem zweiten Elektrodenstapel (2a) verbunden ist,
und dass ein zweiter Stromableiter (18, 18a) mit einem ersten Stromableiter (3, 3a) oder mit einem ersten Elektrodenstapel (2) verbunden ist.

9. Galvanische Zelle (1) gemäß Anspruch 8, **dadurch gekennzeichnet, dass** wenigstens ein Formteil (5, 5a, 5b) einen Durchbruch (9) aufweist,
dass wenigstens ein zweiter Stromableiter (18, 18a) durch den Durchbruch (9) geführt ist
und dass ein zweiter Stromableiter (18, 18a) mit einem ersten Stromableiter (3, 3a) oder mit einem ersten Elektrodenstapel (2) insbesondere innerhalb der Umhüllung (4) verbunden sind.

10. Galvanische Zelle (1) nach einem der vorstehenden Ansprüche, **dadurch gekennzeichnet, dass** sie wenigstens einen Elektrodenstapel (2, 2a) umfasst, welcher wenigstens eine Elektrode umfasst, vorzugsweise wenigstens eine Kathode, welche eine Verbindung mit der Formel LiMPO₄ aufweist, wobei M wenigstens ein Übergangsmetallkation der ersten Reihe des Periodensystems der Elemente ist, wobei dieses Übergangsmetallkation vorzugsweise aus der Gruppe bestehend aus Mn, Fe, Ni und Ti oder einer Kombination dieser Elemente gewählt ist, und wobei die Verbindung vorzugsweise eine Olivinstruktur aufweist, vorzugsweise übergeordnetes Olivin, wobei Fe besonders bevorzugt ist; und/oder dass sie wenigstens einen Elektrodenstapel (2, 2a) umfasst, welcher wenigstens eine Elektrode umfasst, vorzugsweise wenigstens eine Kathode, welche ein Lithiummanganat, vorzugsweise LiMn₂O₄ vom Spinell-Typ, ein Lithiumkobaltat, vorzugsweise LiCoO₂, oder ein Lithiumnickelat, vorzugsweise LiNiO₂, oder ein Gemisch aus zwei oder drei dieser Oxide, oder ein Lithiummischoxid, welches Mangan, Kobalt und Nickel enthält, aufweist.

11. Galvanische Zelle (1) nach einem der vorstehenden Ansprüche, **dadurch gekennzeichnet, dass** sie wenigstens einen Elektrodenstapel (2, 2a) umfasst, welcher wenigstens einen Separator umfasst, welcher nicht oder nur schlecht elektronenleitend ist, und welcher aus einem zumindest teilweise stoffdurchlässigen Träger besteht, wobei der Träger vorzugsweise auf mindestens einer Seite mit einem anorganischen Material beschichtet ist,
wobei als wenigstens teilweise stoffdurchlässiger Träger vorzugsweise ein organisches Material verwendet wird, welches vorzugsweise als nicht verwebtes Vlies ausgestaltet ist, wobei das organische Material vorzugsweise ein Polymer und besonders bevorzugt ein Polyethylenterephthalat (PET) umfasst,
wobei das organische Material mit einem anorganischen, vorzugsweise ionen leitenden Material beschichtet ist, welches weiter vorzugsweise in einem Temperaturbereich von - 40° C bis 200 °C ionenleitend ist, wobei das anorganische Material bevorzugt wenigstens eine Verbindung aus der Gruppe der Oxide, Phosphate, Sulfate, Titanate, Silikate, Aluminosilikate wenigstens eines der Elemente Zr, Al, Li umfasst, besonders bevorzugt Zirkonoxid, und wobei das anorganische, ionenleitende Material bevorzugt Partikel mit einem größten Durchmesser unter 100 nm aufweist.

12. Batterie mit wenigstens zwei galvanischen Zellen (1) gemäß einem der Ansprüche 1 bis 11, **dadurch gekennzeichnet,**
**dass** die galvanischen Zellen (1) im Wesentlichen parallel zueinander angeordnet sind,
und **dass** der Batterie weiter wenigstens ein Temperierelement (8) zugeordnet ist, wobei wenigstens ein Temperierelement (8) zur Berührung wenigstens eines Formteils (5, 5a, 5b) der Umhüllung (4) wenigstens einer der galvanischen Zellen (1) vorgesehen ist.

13. Batterie gemäß Anspruch 12 mit wenigstens zwei galvanischen Zellen (1) gemäß einem der Ansprüche 1 bis 11, **dadurch gekennzeichnet, dass** das wenigstens eine Temperierelement (8) wenigstens einen ersten Kanal (13) aufweist, welcher vorzugsweise mit einem zweiten Temperiermittel (14) gefüllt ist, und/oder dass das wenigstens eine Temperierelement (8) mit einem Wärmetauscher (15) wirkverbunden ist.

14. Verfahren zum Betrieb einer Batterie gemäß Anspruch 12 oder 13, **dadurch gekennzeichnet, dass** die Temperatur des Temperierelements (8) in Abhängigkeit von der gewünschten Betriebstemperatur der galvanischen Zellen (1) der Batterie ausgewählt wird; und/oder dass wenigstens ein erster Kanal (13) des Temperierelements (8) von dem zweiten Temperiermittel (14) durchströmt wird; oder zum Betrieb einer Batterie mit wenigstens zwei galvanischen Zellen (1) gemäß einem der Ansprüche 1 bis 11, **dadurch gekennzeichnet, dass** wenigstens ein Formteil (5, 5a, 5b), insbesondere ein Wärmeübergangsbereich (7) eines Formteils (5, 5a, 5b) von einem ersten Temperiermittel (14) angeströmt bzw. teilweise umströmt wird.

15. Verfahren zur Herstellung einer galvanischen Zelle (1) gemäß einem der Ansprüche 1 bis 11, **dadurch gekennzeichnet,**
**dass** zunächst wenigstens zwei Formteile (5, 5a, 5b) der Umhüllung (4) insbesondere stoffschlüssig miteinander verbunden werden
und **dass** anschließend wenigstens ein Formteil (5, 5a, 5b) der Umhüllung (4) aus einem Ausgangszustand durch Biegen in einen verformten Zustand überführt wird, wobei wenigstens eine Ausdehnung des Formteils (5, 5a, 5b) im verformten Zustand gegenüber dem Ausgangszustand verringert ist.
